# EUROPÄISCHE PATENTSCHRIFT

(11) **EP 2 994 626 B1**
(45) Veröffentlichungstag und Bekanntmachung des Hinweises auf die Patenterteilung: **10.01.2018**
(21) Anmeldenummer: 14731898.4
(22) Anmeldetag: 25.04.2014
(51) Int. Cl.: F01N 3/08

(54) **MODULARES TREIBSTOFF-KOHLENDIOXID-SPEICHERSYSTEM UND ENTSPRECHENDES SPEICHERVERFAHREN**
MODULAR STORAGE SYSTEM FOR FUEL AND CARBON DIOXIDE AND CORRESPONDING STORAGE METHOD
SYSTÈME MODULAIRE DE STOCKAGE POUR LE CARBURANT ET LE DIOXYDE DE CARBONE ET PROCÉDÉ DE STOCKAGE CORRESPONDANT

(30) Priorität: 25.04.2013 AT 3462013
(43) Veröffentlichungstag der Anmeldung: 16.03.2016
(73) Patentinhaber: Mair, Christian, 6020 Innsbruck (AT)
(72) Erfinder: Mair, Christian, 6020 Innsbruck (AT)
(86) Internationale Anmeldenummer: PCT/AT2014/050107
(87) Internationale Veröffentlichungsnummer: WO 2014/172741

(56) Entgegenhaltungen:
- EP-A1- 2 472 077
- WO-A2-2012/145303
- AT-A4- 511 941
- JP-A- 2012 002 159

## Beschreibung

### Technisches Gebiet:

Die Erfindung betrifft Speichersysteme für Betriebsstoffe von mobilen Antriebsvorrichtungen.

### Stand der Technik:

Weltweit wird die Mehrzahl von Fahrzeugen durch Verbrennungsmotoren angetrieben, die Kohlenwasserstoffverbindungen unter Verwendung von Luftsauerstoff oxidieren und das dabei entstehende Kohlendioxid in die Erdatmosphäre emittieren. Dies trägt im beträchtlichen Ausmaß zur Steigerung des Kohlenstoffdioxidgehaltes der Atmosphäre und zu einer Verstärkung des weltweiten, atmosphärischen Treibhauseffektes bei.

Um den klimatischen Effekt herkömmlicher, kohlenwasserstoffbetriebener Fahrzeuge zu reduzieren, wurden Fahrzeuge vorgeschlagen (z.B. Patent US5680764A, US6523349B2), die kohlen- und wasserstoffhältige Treibstoffe in einer stickstofffreien Umgebung oxidieren, um ein Produktgas zu erhalten, das zum überwiegenden Teil aus Kohlendioxid und Wasser besteht, und dadurch, nach erfolgter Wasserabscheidung, eine Kohlendioxidspeicherung in den Fahrzeugen ermöglichen. Eine solche stickstofffreie bzw. -arme und sauerstoffangereicherte (mehr als 21 Vol% Sauerstoffanteil) Oxidationsumgebung kann beispielsweise durch die Abscheidung von Sauerstoff aus der Umgebungsluft mit Hilfe von Membranen oder durch die Verwendung von im Fahrzeug mitgeführtem Sauerstoff erzeugt werden (vgl. Yantovski, Evgeny: Energy and Exergy Currents. NOVA Science Publiction. New York, 1994).

Um den Raumbedarf für die Speicherung des Kohlendioxids in den Fahrzeugen möglichst gering zu halten, wurde vorgeschlagen, den Fahrzeugtreibstoff und das anfallende Kohlendioxid in ein und demselben Tank zu speichern. Dazu müsse der Tank eine verschiebbare Trennwand aufweisen und die Einspeisung der beiden Stoffe an unterschiedlichen Seiten der Trennwand erfolgen, ebenso deren Entnahme. In dem Maße, in dem aus dem Tank während des Betriebs des Fahrzeugs Treibstoff entnommen wird, könne dann durch Verschieben der Trennwand Kohlendioxid im Tank eingelagert werden (vgl. Yantovski, Evgeny u.a.: Zero Emissions Power Cycles. CRC Press, Taylor & Francis Group. New York, 2009, S. 42). In der genannten Ausführungsvariante wird dabei das zu speichernde Kohlendioxid durch Kompression in einen flüssigen Zustand gebracht.

Ebenso wird in JP 2012-002159 die gleichzeitige Speicherung von Fahrzeugtreibstoff und anfallendem Kohlendioxid in Tankgefäßen beschrieben, die durch mechanisch flexible Membranen in Unterräume geteilt werden und die die Ein- und Ausspeicherung von Fahrzeugtreibstoff und anfallendem Kohlendioxid an den gegenüberliegenden Seiten dieser Membranen in den durch die Membranen entstehenden Unterräumen vorsehen.

### Aufgabe der Erfindung:

Aufgabe der Erfindung ist es, sowohl ein Speichersystem als auch ein Speicherverfahren für kohlenwasserstoffbetriebene, kohlendioxidspeichernde, mobile Maschinen zur Verfügung zu stellen, die die Einlagerung von flüssigem oder überkritischem Kohlendioxid in dem zur Treibstoffspeicherung genutzten und durch den Betrieb der Maschine frei werdenden Speicherraum vorsehen und die es dabei erlauben, eine Vermengung von flüssigem, zum Antrieb der mobilen Maschine genutztem Treibstoff und flüssigem oder überkritischem Kohlendioxid zu vermeiden, ohne innerhalb der Tankbehälter eine Trennung der verschiedenen Substanzen durch eine sich bewegende mechanische Trennvorrichtung wie z. B. eine Trennwand oder eine mechanisch flexible Membran zu erfordern.

Außerdem soll durch das erfindungsgemäße Betriebsstoffspeichersystem eine energiesparende Speicherung von flüssigem Kohlendioxid im Fahrzeug erreicht werden.

### Darstellung der Erfindung:

In den folgenden Ausführungen wird mit dem Begriff "Treibstoff" eine einzelne Kohlenstoffverbindung oder ein Gemisch von mehreren verschiedenen Kohlenstoffverbindungen bezeichnet, die durch Oxidation mit Sauerstoff in ein Produktgas übergeführt werden können, welches zur Gänze oder zum überwiegenden Teil aus Kohlendioxid und Wasser besteht. Außerdem zeichnen sich diese Treibstoffe dadurch aus, dass sie bei Druck- und Temperaturbedingungen, unter denen Kohlendioxid gasförmig ist, in flüssiger Form vorliegen können. Insbesondere kann es sich bei einem Treibstoff um Methanol, Dimethylether oder Ameisensäure handeln.

In den folgenden Ausführungen wird mit dem Begriff "Fahrzeug" eine mobile Maschine bezeichnet. Insbesondere können damit Wasser-, Land- und Luftfahrzeuge gemeint sein.

Das vorgeschlagene Speichersystem für Betriebsstoffe bezieht sich auf Fahrzeuge, die Treibstoffe zu ihrer Energiegewinnung nützen und in denen Kohlenstoffdioxid zur fahrzeuginternen Speicherung anfällt. Zum Beispiel ist dies bei Fahrzeugen der Fall, die die zu ihrem Betrieb nötige Energie teilweise oder gänzlich aus der Oxidation von Treibstoff in ein überwiegend aus Kohlendioxid und Wasser bestehendes Produktgas beziehen und die aus diesem durch Wasserabscheidung konzentriertes Kohlendioxid gewinnen, das fahrzeugintern gespeichert wird. Systeme, die dieses Prinzip der Kohlendioxidabscheidung bei Verbrennungsprozessen von Kohlenwasserstoffverbindungen technisch verwirklichen, wurden in den vergangenen Jahren zur Kohlendioxidabscheidung in Kohle- und Gaskraftwerken in verschiedensten Ausführungsformen entwickelt. Die Verbrennung des Treibstoffs erfolgt dabei jeweils unter Zuführung von konzentriertem Sauerstoff. Der zur Durchführung der fahrzeuginternen Kohlendioxidabscheidung nötige konzentrierte Sauerstoff kann in den Fahrzeugen mitgeführt oder aus der Umgebungsluft mit Hilfe von Membranen gewonnen werden.

Ein erfindungsgemäßes Speichersystem enthält mehrere einzelne Tankgefäße (5), welche in den folgenden Ausführungen als "Speichermodule" bezeichnet werden. Jedes einzelne Speichermodul (5) verfügt sowohl über mindestens eine Treibstoffzu- und Treibstoffabführung als auch über mindestens eine Kohlendioxidzu- und Kohlendioxidabführung, jeweils mit entsprechenden Durchflussreglern (9, 10, 11, 12, 13). Ein erfindungsgemäßes Speichersystem enthält außerdem mindestens eine Vorrichtung zur Kompression von Kohlendioxid (6b) und mindestens eine Vorrichtung zur Abkühlung von Kohlendioxid (7b), mit deren Hilfe der Druck und die Temperatur des den einzelnen Speichermodulen (5) zugeführten Kohlendioxids beeinflusst und eine flüssige oder überkritische Einlagerung von Kohlendioxid in einzelne Speichermodule durchgeführt werden kann. Darüber hinaus enthält ein erfindungsgemäßes Speichersystem ein Steuerungssystem, das die Füll-, Entleerungs-, Kompressions- und Kühlprozesse innerhalb des Speichersystems steuert.

Als Vorrichtung zur Kompression von Kohlendioxid (6a, 6b) kann jede Kompressionsvorrichtung für Gase verwendet werden, die nach dem Stand der Technik bekannt ist und die für den Einbau in mobilen Maschinen kompakt genug ausführbar ist (z.B. Kolbenkompressoren, Schraubenkompressoren, Turbokompressoren). Als Vorrichtung zur Abkühlung von Kohlendioxid (7a, 7b) können verschiedene Bauarten von Wärmetauschern verwendet werden, wie sie nach dem Stand der Technik bekannt sind (z. B. Plattenwärmetauscher, Spiralwärmetauscher, Kühlregister). Alle Komponenten dieser Vorrichtungen müssen im Rahmen ingenieurstechnischer Routinetätigkeit auf die in den Speichermodulen (5) und Leitungen auftretenden Drücke und Temperaturen ausgelegt und aufeinander abgestimmt werden.

In einer Variante eines erfindungsgemäßen Speichersystems weisen auch die einzelnen Speichermodule (5) Regelungs- und Kühlsysteme auf, die dazu dienen, bestimmte Temperaturverhältnisse im Inneren der betreffenden Speichermodule zu erzeugen und damit das in ihnen eingelagerte Kohlendioxid in einen flüssigen Zustand überzuführen oder in einem solchen zu halten. Für solche Kühlsysteme können wiederum verschiedene Bauarten von Wärmetauschern verwendet werden, wie sie nach dem Stand der Technik bekannt sind (z. B. Plattenwärmetauscher, Spiralwärmetauscher, Kühlregister).

Der Kern der Erfindung ist ein Verfahren zur platzsparenden Speicherung von Treibstoff und Kohlendioxid in einem Fahrzeug: Beim Betrieb des Fahrzeugs wird aus Speichermodulen (5) flüssiger Treibstoff entnommen und das durch dessen Oxidation entstehende Kohlendioxid in den durch die Treibstoffentnahme frei werdenden Speicherraum eingebracht. Dabei wird das Kohlendioxid in jene Speichermodule, aus denen gerade flüssiger Treibstoff entnommen wird, unter solchen Druck- und Temperaturverhältnissen eingeführt, dass es sich dort in einem gasförmigen Zustand befindet und sich oberhalb des flüssigen Treibstoffs in einer Gasphase ablagert. Dadurch kann erreicht werden, dass der flüssige Treibstoff, der aus den betreffenden Speichermodulen entnommen wird, nur technisch vernachlässigbare Mengen an gelöstem Kohlendioxid enthält, es aber zu keiner Vermischung von flüssigem Treibstoff und flüssigem oder überkritischem Kohlendioxid kommt. Wird während des Fahrzeugbetriebs aus einem oder mehreren dieser Speichermodulen, in die auf die beschriebene Art und Weise gasförmiges Kohlendioxid einführt wurde, kein weiterer Treibstoff mehr entnommen, so sieht das erfindungsgemäße Speicherverfahren vor, durch Zuführung von weiterem Kohlendioxid, das auch eine tiefere Temperatur als das vorher eingebrachte Kohlendioxid aufweisen kann, und durch eine eventuelle Kühlung der Innenräume der betreffenden Speichermodule die Druck- und Temperaturverhältnisse innerhalb dieser so zu verändern, dass das in den betreffenden Speichermodulen enthaltene Kohlendioxid in einen flüssigen oder überkritischen Zustand übergeht. Durch eine zeitlich geordnete Entnahme von Treibstoff aus den einzelnen Speichermodulen, die sich dadurch kennzeichnet, dass in mindestens ein Speichermodul die Kohlendioxideinlagerung in flüssiger oder überkritischer Form durchgeführt wird, während mindestens ein anderes Speichermodul noch gasförmiges Kohlendioxid und flüssigen Treibstoff enthält, kann im Speichersystem als Ganzem gleichzeitig flüssiger, nicht mit flüssigem oder überkritischem Kohlendioxid vermischter Treibstoff gespeichert und entnommen als auch Kohlendioxid in flüssiger Form eingelagert werden. Wird die Einlagerung von Kohlendioxid in flüssiger oder überkritischer Form ausschließlich bei Speichermodulen durchgeführt, aus denen der flüssige Treibstoff schon vollständig entnommen wurde, kann dieses Speicherverfahren außerdem dazu dienen, eine Vermischung von flüssigem Treibstoff und flüssigem oder überkritischem Kohlendioxid innerhalb des Speichersystems völlig zu vermeiden, so wie es beschriebene Aufgabe der Erfindung ist.

Eine Variante eines erfindungsgemäßen Speichersystems weist mindestens zwei getrennte Zuleitungen für Kohlendioxid (3a, 3b) auf, die die Speichermodule jeweils parallel versorgen, und die sich darin unterscheiden, dass sie Kohlendioxid mit unterschiedlichen Druck- und Temperatureigenschaften enthalten: Eine erste Zuleitung (3a) speist Kohlendioxid unter einem Druck und mit einer Temperatur in Speichermodule (5) ein, dass es in diesen einen gasförmigen Zustand besitzt und dort gleichzeitig Treibstoff in flüssiger Form vorliegen kann. Eine zweite Zuleitung (3b) speist Kohlendioxid unter einem Druck und mit einer Temperatur in Speichermodule (5) ein, dass es sich in einem flüssigen oder überkritischen Zustand befindet oder diesen in den betreffenden Speichermodulen annimmt.

Die Druck- und Temperaturwerte, unter denen Kohlendioxid einen flüssigen oder überkritischen Zustand annimmt, können leicht der chemischen Basisliteratur entnommen und vom Fachmann im Rahmen der ingenieurstechnischen Routinetätigkeit zur Auslegung der Anlage herangezogen werden. Eine vorteilhafte Variante des erfindungsgemäßen Speicherverfahrens stimmt Druck- und Temperatur des einzulagernden Kohlendioxids, die Aktivität der eventuell vorhandenen Regelungsvorrichtung für die Innentemperatur der einzelnen Speichermodule und die Reihenfolge und Vorgangsweise bei der Füllung der Speichermodule mit Kohlendioxid so aufeinander ab, dass der im Rahmen des Speichervorgangs zur Kompression und Kühlung nötige Energieaufwand insgesamt minimiert wird.

Eine Variante des erfindungsgemäßen Verfahrens besteht darin, den Treibstoff jeweils nur aus einem Speichermodul zu entnehmen und die Speichermodule in der Reihenfolge ihrer Treibstoff-Entleerung mit Kohlendioxid zu füllen.

Eine andere Variante des erfindungsgemäßen Verfahrens besteht darin, in einer ersten zeitlichen Phase aus allen Speichermodulen (5) parallel so viel Treibstoff zu entnehmen und so viel Kohlendioxid unter erhöhtem Druck, aber noch in gasförmigem Zustand einzuführen, dass ohne weitere Kohlendioxidzuführung und ohne innerhalb der Speichermodule einen Unterdruck zu erzeugen aus allen Speichermodulen der gesamte Treibstoff entnommen werden könnte. In einer zweiten zeitlichen Phase wird dann nacheinander aus einzelnen Speichermodule der gesamte in ihnen enthaltene Treibstoff entnommen und Kohlendioxid unter so hohem Druck eingelagert, dass dieses in den betreffenden Speichermodulen in einem flüssigen oder überkritischen Zustand vorliegt. Diese Variante des erfindungsgemäßen Speicherverfahrens könnte auch nur mit einer gemeinsamen Zuleitung für Kohlendioxid zu den Speichermodulen umgesetzt werden, da nur ein einmaliger Wechsel der Druckverhältnisse in der Zuleitung zur vollständigen Entnahme des im Speichersystems enthaltenen Treibstoffs nötig ist.

Sind alle Speichermodule vollständig mit Treibstoff gefüllt, kann es, um überhaupt Treibstoff aus einem oder mehreren Speichermodulen (5) entnehmen und der fahrzeuginternen Oxidation zuführen zu können, nötig sein, gasförmiges Kohlendioxid aus einem Pufferspeicher (8) in eines oder mehrere Speichermodule zu bringen. Dieses Kohlendioxid kann dem Fahrzeug von außen zugeführt oder während einer vorangegangenen Betriebsphase des Fahrzeugs gespeichert worden sein.

Ebenso wird während der Betriebsphase, in der Kohlendioxid nicht in flüssiger oder überkritischer Form in zumindest einem der Speichermodule gespeichert wird und in der deshalb im Speichersystem eine geringere Speicherkapazität für Kohlendioxid bereitsteht als bei möglicher Einlagerung in flüssigem oder überkritischem Zustand, Kohlendioxid, das nicht in den Speichermodulen (5) Platz findet, im Pufferspeicher (8) zwischengespeichert.

Alternativ zu einem System mit nur einem Pufferspeicher (8), kann ein erfindungsgemäßes Speichersystem auch mindestens zwei Pufferspeicher (8a, 8b) enthalten, von denen einer gasförmiges, der andere flüssiges oder überkritisches Kohlendioxid enthält.

Eine vorteilhafte Variante des erfindungsgemäßen Speichersystems besteht darin, im Falle einer bei tiefen Temperaturen (ca. -190°C) und in flüssiger Form durchgeführten, fahrzeuginternen Sauerstoffspeicherung, welche der Sauerstoffbereitstellung für die fahrzeuginterne Treibstoffoxidation dient, den aus dem Sauerstoffspeicher gasförmig entnommenen und der fahrzeuginternen Treibstoffoxidationsvorrichtung zugeführten Sauerstoff in den Vorrichtungen zur Abkühlung von Kohlendioxid (7a, 7b) und/oder in Speichermodulkühlungen (16) zu verwenden. Dadurch kann einerseits der Energiebedarf einer eventuell unabhängig davon bestehenden und in den Ausführungen oben genannten Vorrichtung zur Innentemperaturregelung von Speichermodulen verringert werden, ebenso wie jener der Vorrichtung zur Abkühlung von Kohlendioxid (7a,7b). Andererseits ergibt sich daraus auch deshalb eine Verminderung des Energiebedarfs der Kohlendioxidspeicherung, da Kohlendioxid, das prinzipiell in einem Temperaturbereich von -56,6°C bis +31°C in flüssigem Zustand vorliegen kann, bei tieferen Temperaturen unter geringerem Druck in einen flüssigen Zustand übergeht. Bei einer niedrigeren Speichertemperatur für flüssiges Kohlendioxid in den Speichermodulen vermindert sich deshalb der zur Verflüssigung des Kohlendioxids nötige Druck und damit der Energieaufwand der Verflüssigung.

Für Speichermodulkühlungen (16) können wiederum verschiedene Bauarten von Wärmetauschern verwendet werde, wie sie nach dem Stand der Technik bekannt sind (z. B. Plattenwärmetauscher, Spiralwärmetauscher, Kühlregister).

Die Verflüssigung und Speicherung von Kohlendioxid auf einem tiefen Temperaturniveau (ca. -56,6°C bis +10°C) muss in Abstimmung mit dem verwendeten Treibstoff durchgeführt werden, da es dabei zu einer Erstarrung von Treibstoff bei der Wiederbefüllung der Speichermodule mit Treibstoff kommen kann, wenn sich deren Innentemperatur zum Zeitpunkt der Wiederbefüllung noch auf einem tiefen Temperaturniveau befindet. Ameisensäure etwa verfestigt sich bei Atmosphärendruck schon bei Temperaturen unterhalb von 8,4°C. Erstarrter Treibstoff kann nicht nur die Arbeitsweise des Speichersystems beeinträchtigen, sondern an diesem auch mechanische Schäden verursachen.

### Kurze Beschreibung der Zeichnungen:

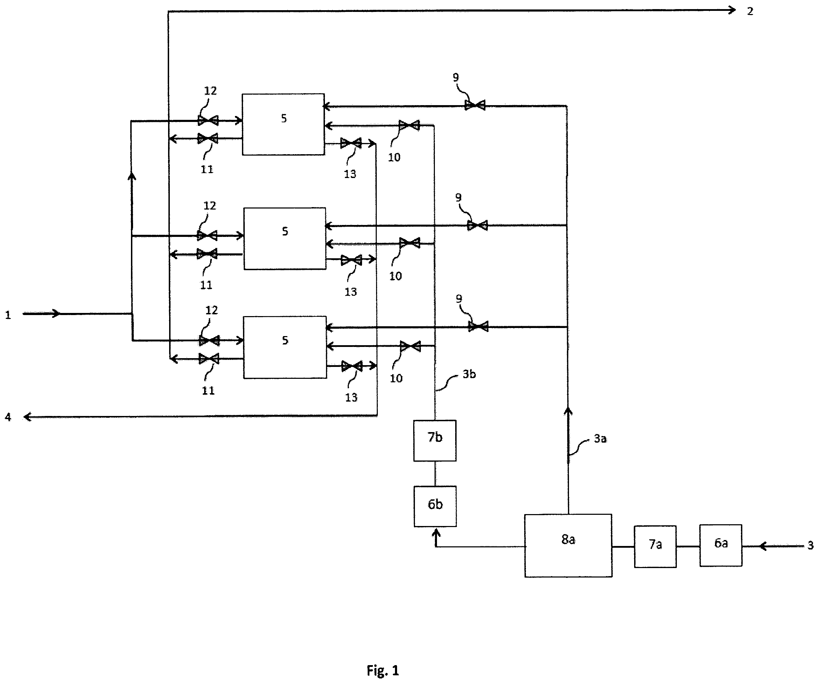

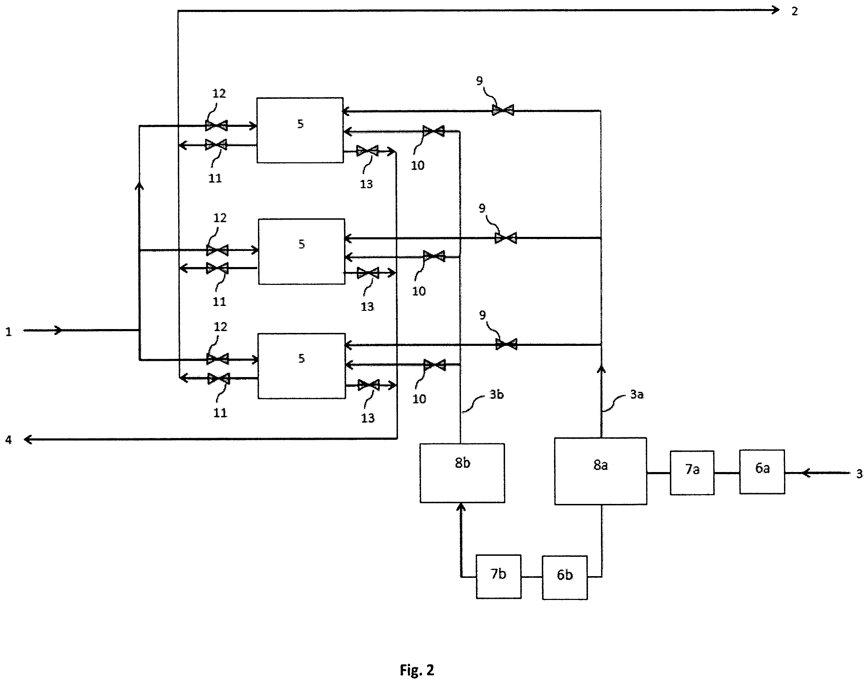

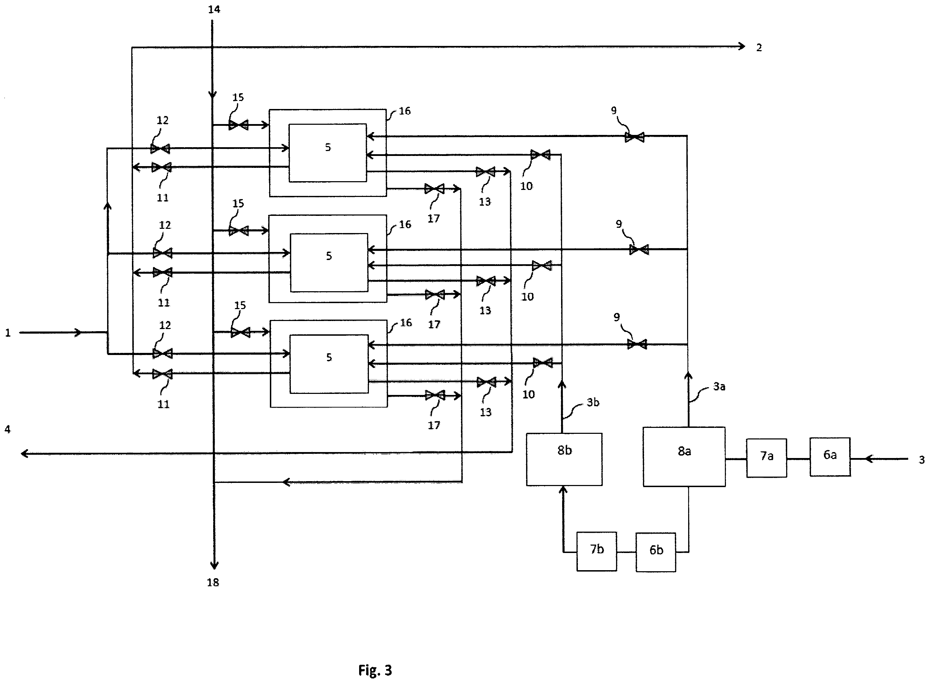

In den Fig. 1 bis 3 sind drei Ausführungsvarianten des Speichersystems der Erfindung schematisch abgebildet. Dabei sind aus Gründen der einfacheren Darstellung jeweils Speichersysteme mit nur drei Speichermodulen (5) dargestellt. Es zeigen:
Fig. 1 ein Speichersystem mit zwei Zuleitungen für Kohlendioxid (3a, 3b) und einem einzelnen Pufferspeicher (8a) für gasförmiges Kohlendioxid
Fig. 2 ein Speichersystem mit zwei Zuleitungen für Kohlendioxid (3a, 3b) und zwei getrennten Pufferspeicher (8a, 8b) für gasförmiges und für flüssiges oder überkritisches Kohlendioxid.
Fig. 3 ein Speichersystem mit zwei Zuleitungen für Kohlendioxid (3a, 3b), zwei getrennten Pufferspeicher (8a, 8b) für gasförmiges und für flüssiges oder überkritisches Kohlendioxid und einer Speichermodulkühlung (16) durch Sauerstoffgas aus einem fahrzeuginternen Speicher für flüssigen Sauerstoff.

### Bezugszeichenliste:

- 1: Treibstoff Füllung
- 2: Treibstoff Entnahme
- 3: Kohlendioxid Füllung
- 3a: Zuleitung für gasförmiges Kohlendioxid
- 3b: Zuleitung für flüssiges oder überkritisches Kohlendioxid
- 4: Kohlendioxid Entnahme
- 5: Speichermodul zur Treibstoff- und Kohlendioxidspeicherung
- 6a: Vorrichtung zur Kompression von Kohlendioxid
- 6b: Vorrichtung zur Kompression von Kohlendioxid
- 7a: Vorrichtung zur Abkühlung von Kohlendioxid
- 7b: Vorrichtung zur Abkühlung von Kohlendioxid
- 8a: Pufferspeicher für gasförmiges Kohlendioxid
- 8b: Pufferspeicher für flüssiges oder überkritisches Kohlendioxid
- 9: Durchflussregler zur Füllung mit gasförmigem Kohlendioxid
- 10: Durchflussregler zur Füllung mit flüssigem oder überkritischem Kohlendioxid
- 11: Durchflussregler zur Entnahme von Treibstoff
- 12: Durchflussregler zur Füllung mit Treibstoff
- 13: Durchflussregler zur Entnahme von Kohlendioxid
- 14: Zufuhr von Sauerstoffgas zur Kühlung
- 15: Durchflussregler für Sauerstoffgas zur Kühlung
- 16: Speichermodulkühlung
- 17: Durchflussregler zur Entnahme von Sauerstoffgas aus Speichermodulkühlung
- 18: Abfuhr von Sauerstoffgas

## Patentansprüche

1. Verfahren zur Speicherung von Kohlendioxid in mit kohlenstoffhaltigen Treibstoffen betriebenen, das durch den Betrieb entstehende Kohlendioxid teilweise oder gänzlich speichernden, mobilen Maschinen, welche ein Speichersystem umfassen, das mehrere Speichermodule (5) enthält, die jeweils keine sich bewegende mechanische Trennvorrichtung für die Trennung von flüssigem Treibstoff und flüssigem oder überkritischem Kohlendioxid aufweisen, welches die nachstehenden, nacheinander erfolgenden Verfahrensschritte umfasst:
a. Speicherung von gasförmigem Kohlendioxid in mindestens einem flüssigen Treibstoff enthaltenden Speichermodul (5) eines Speichersystems,
b. Änderung der Druck- und/oder Temperaturbedingungen in mindestens einem dieser gasförmiges Kohlendioxid enthaltenden Speichermodule (5), aus dem der flüssige Treibstoff schon vollständig entnommen wurde, in einer Art und Weise, dass das gasförmige Kohlendioxid in einen flüssigen oder überkritischen Zustand übergeht, während in mindestens einem anderen Speichermodul (5) des Speichersystems noch flüssiger Treibstoff und gasförmiges Kohlendioxid enthalten sind.

2. Verfahren nach Anspruch 1, **dadurch gekennzeichnet, dass** die Temperatur im Inneren von mindestens einem der Speichermodule (5) auch mit Hilfe von gasförmigem Sauerstoff geregelt wird, der aus einem fahrzeuginternen Flüssigsauerstofftank entnommen wird.

3. Verfahren nach einem der Ansprüche 1 bis 2, **dadurch gekennzeichnet, dass** mindestens eine Vorrichtung zur Abkühlung von Kohlendioxid (7a, 7b) Kohlendioxid mit Hilfe von gasförmigem Sauerstoff, der aus einem fahrzeuginternen Flüssigsauerstofftank entnommen wird, abkühlt.

4. Speichersystem für mit kohlenstoffhaltigen Treibstoffen betriebene, das durch den Betrieb entstehende Kohlendioxid teilweise oder gänzlich speichernde, mobile Maschinen, das
a. eine Mehrzahl von Speichermodulen (5) zur Speicherung von flüssigem Treibstoff sowie gasförmigem, flüssigem und überkritischem Kohlendioxid enthält, die jeweils einzeln mindestens eine Zu- und Abführungsöffnung für flüssigen Treibstoff sowie mindestens eine Zu- und Abführungsöffnung für Kohlendioxid aufweisen,
b. mindestens eine Vorrichtung zur Kompression von Kohlendioxid (6a, 6b) enthält, und
c. ein Leitungssystem zum Transport von Kohlendioxid enthält, in das Kohlendioxid aus den genannten Vorrichtungen zur Kompression von Kohlendioxid (6a, 6b) einleitbar ist und durch das Kohlendioxid in die genannten Zuführungsöffnungen für Kohlendioxid der genannten Speichermodule (5) zuführbar ist,
**dadurch gekennzeichnet, dass** es innerhalb der genannten Speichermodule (5) keine sich bewegende mechanische Trennvorrichtung für die Trennung von flüssigem Treibstoff und flüssigem oder überkritischem Kohlendioxid gibt.

5. Speichersystem nach Anspruch 4, **dadurch gekennzeichnet, dass** mindestens eines der genannten Speichermodule (5) mit einer Speichermodulkühlung (16) ausgestattet ist.

6. Speichersystem nach Anspruch 5, **dadurch gekennzeichnet, dass** einer oder mehreren der genannten Speichermodulkühlungen (16) gasförmiger, aus einem fahrzeuginternen Flüssigsauerstofftank entnommener Sauerstoff zuführbar ist.

7. Speichersystem nach einem der Ansprüche 4 bis 6, **dadurch gekennzeichnet, dass** das Speichersystem zusätzlich mindestens eine Vorrichtung zur Abkühlung von Kohlendioxid (7a, 7b) enthält und dieser gasförmiger, aus einem fahrzeuginternen Flüssigsauerstofftank entnommener Sauerstoff zuführbar ist.

## Claims

1. A process for the storage of carbon dioxide within mobile machines which are driven by carbon-containing fuels, which partially or completely store the carbon dioxide occurring during operation and which include a storage system comprising several storage modules (5), which each do not have a moving, mechanical device for the separation of liquid fuel and liquid or supercritical carbon dioxide, the process comprising the following steps successively carried out:
a. storage of gaseous carbon dioxide in at least one storage module (5) of a storage system, the storage module containing liquid fuel;
b. change of the pressure and/or temperature conditions in at least one of these gaseous carbon-dioxide-containing storage modules (5) from which all liquid fuel has already been withdrawn in a manner that the gaseous carbon-dioxide passes into a liquid or supercritical state, whereas at least one other storage module (5) of the storage system still contains liquid fuel and gaseous carbon dioxide.

2. A process according to Claim 1, **characterised by** the fact that the temperature inside at least one of the storage modules (5) is controlled also by means of gaseous oxygen which is withdrawn from a storage tank for liquid oxygen inside the vehicle.

3. A process according to one of the claims 1 to 2, **characterised by** the fact that at least one apparatus for cooling carbon dioxide (7a,7b) cools carbon dioxide by means of gaseous oxygen which is withdrawn from a storage tank for liquid oxygen inside the vehicle.

4. Storage system for mobile machines driven by carbon-containing fuels and storing partially or completely the carbon dioxide occurring during operation, the storage system comprising
a. a plurality of storage modules (5) for the storage of liquid fuel as well as of gaseous, liquid and supercritical carbon dioxide which have each at least one feed and discharge opening for liquid fuel as well as at least one feed and discharge opening for carbon dioxide;
b. at least one apparatus for compression of carbon dioxide (6a, 6b); and
c. one piping system for the transport of carbon dioxide in which carbon dioxide of the said apparatus for compression of carbon dioxide (6a, 6b) can be introduced and through which carbon dioxide can be fed into the said feed opening for carbon dioxide of the said storage modules (5),
**characterised by** the fact that inside of the said storage modules (5) there is no moving, mechanical device for the separation of liquid fuel and liquid or supercritical carbon dioxide.

5. Storage system according to Claim 4, **characterised by** the fact that at least one of the said storage modules (5) is equipped with a storage module cooling device (16).

6. Storage system according to Claim 5, **characterised by** the fact that gaseous oxygen withdrawn from a storage tank for liquid oxygen inside the vehicle can be introduced into one or several of the said storage module cooling devices (16).

7. Storage system according to one of the claims 4 to 6, **characterised by** the fact that the storage system additionally comprises at least one apparatus for cooling carbon dioxide (7a, 7b) and that gaseous oxygen withdrawn from a storage tank for liquid oxygen inside the vehicle can be fed into this apparatus.

## Revendications

1. Un procédé de stockage de dioxyde de carbone dans des machines mobiles, qui sont alimenté par des carburants carbonés, qui stockent partiellement ou totalement le dioxyde de carbone généré par leur propre exploitation et qui incluent un système de stockage ; ce système de stockage comprenant plusieurs des modules de stockage (5), qui individuellement ne possèdent pas de dispositif mécanique et mobile pour la séparation entre le carburant liquide et le dioxyde de carbone liquide ou hypercritique. Le procédé comprend les opérations suivantes ayant lieu successivement :
a. stockage de dioxyde de carbone gazeux dans au moins un module de stockage (5) du système de stockage, ledit module contenant du carburant liquide,
b. changement de conditions de pression et/ou de température dans ou moins un de ces module de stockage (5) contenant dioxyde de carbone gazeux dont le carburant liquide a été complétement retiré ; ledit changement des condition de façon à ce que le dioxyde de carbone gazeux passe à l'état liquide ou hypercritique alors qu'en parallèle dans au moins un autre module de stockage (5) du system de stockage il reste encore du carburant liquide et du dioxyde de carbone gazeux.

2. Un procédé selon la Revendication 1, **caractérisé en ce que** la température à l'intérieur d'au moins un des modules de stockage (5) est régulée aussi au moyen d'oxygène gazeux retiré d'en réservoir d'oxygène liquide embarqué dans le véhicule.

3. Un procédé selon l'une quelconque de Revendications 1 à 2, **caractérisé en ce qu'**au moins un dispositif de refroidissement de dioxyde de carbone (7a,7b) refroidit du dioxyde de carbone au moyen d'oxygène gazeux retiré d'en réservoir d'oxygène liquide embarqué dans le véhicule.

4. Système de stockage pour des machines mobiles, qui sont alimenté par des carburants carbonés et qui stockent partiellement ou totalement le dioxyde de carbone généré par leur propre exploitation. Ce système comprend
a. une pluralité de modules de stockage (5) pour le stockage du carburant liquide et du dioxyde de carbone gazeux, liquide ou hypercritique, qui possèdent individuellement au moins une ouverture d'entrée et de sortie du carburant liquide aussi bien qu'au moins une ouverture d'entrée et de sortie du dioxyde de carbone,
b. au moins un dispositif de compression du dioxyde de carbone (6a,6b) et
c. un système de conduite pour le transport du dioxyde de carbone, dans lequel dioxyde de carbone provenant desdits dispositifs de compression du dioxyde de carbone (6a,6b) peut être introduit et par lequel du dioxyde de carbone peut être alimenté dans lesdits ouvertures d'entrée pour du dioxyde de carbone desdits modules de stockage (5),
**caractérisé en ce qu'**à l'intérieur desdits modules de stockage (5) il n'y a pas de dispositif mécanique et mobile pour la séparation entre le carburant liquide et le dioxyde de carbone liquide ou hypercritique.

5. Système de stockage selon la Revendication 4, **caractérisé en ce qu'**au moins un desdites modules des stockage (5) est équipé avec un refroidisseur de module de stockage (16).

6. Système de stockage selon la Revendication 5, **caractérisé en ce qu'**un ou plusieurs des refroidisseurs de module de stockage (16) peuvent être alimentés avec d'oxygène gazeux retiré d'un réservoir d'oxygène liquide embarqué dans le véhicule.

7. Système de stockage selon l'une quelconque de Revendications 4 à 6, **caractérisé en ce que** le système de stockage comporte en plus au moins un dispositif de refroidissement de dioxyde de carbone (7a, 7b) et que d'oxygène gazeux, retiré d'un réservoir d'oxygène liquide embarqué dans le véhicule peut être alimenté à ledit dispositif.
